# EUROPEAN PATENT APPLICATION

(11) **EP 1 562 300 A1**
(43) Date of publication of application: **10.08.2005**
(21) Application number: 05001551.0
(22) Date of filing: 26.01.2005
(51) Int. Cl.: H04B 1/707

(54) **Synchronization determination control device and synchronization determination control method**

(30) Priority: 05.02.2004 JP 2004028968
(71) Applicant: NEC CORPORATION, Tokyo (JP)
(72) Inventor: Sato, Kazunori, NEC Corporation, Tokyo (JP)
(74) Representative: Glawe, Delfs, Moll & Partner

(57) **Abstract**

An SIR measurement unit measures SIR based on a received signal. A velocity detection unit detects the moving velocity of a mobile station. A synchronization determination processing unit determines whether or not the detected moving velocity is larger than a velocity detection threshold value. If it is determined that the detected moving velocity is larger than the velocity detection threshold value, then the synchronization determination processing unit changes an SIR threshold value to a larger value. Also, if it is determined that the detected moving velocity is not larger than the velocity detection threshold value, then the synchronization determination processing unit changes the SIR threshold value to a smaller value. Then, the synchronization determination processing unit performs the synchronization determination by comparing the measured SIR with the changed SIR threshold value.

## Description

### BACKGROUND OF THE INVENTION

### Field of the Invention

The present invention relates to a synchronization determination control device and a synchronization determination control method, and more particularly to a synchronization determination control device and a synchronization determination control method that changes a synchronization determination parameter according to the change of external environments.

### Description of the Related Art

In Japanese Patent Laid-Open No. 2002-16587, there is described a receiving device that performs synchronization determination in a mobile station such as a mobile telephone. The receiving device described in Japanese Patent Laid-Open No. 2002-16587 determines the phase of pilot symbol from a received signal, and determines the synchronization timing of the received signal on the basis of the determined phase. Then, the receiving device demodulates the received signal on the basis of the determined synchronization timing.

In Japanese Patent Laid-Open No. 2003-152599, there is described a CDMA synchronization determination device for performing synchronization determination in a mobile radio communication system using a DS-CDMA radio communication method. The CDMA synchronization determination device described in Japanese Patent Laid-Open No. 2003-152599 calculates the number of error bits of a received pilot symbol for each finger. Then, the CDMA synchronization determination device determines based on the calculated number of error bits for each finger whether it is in an in-sync state or in an out-of-sync state.

In a mobile radio communication system, a mobile station, such as a mobile telephone, performs synchronization determination by use of a predetermined synchronization determination parameter being a reference value for the synchronization determination. For example, a mobile station using a CDMA method employs as the synchronization determination parameter a predetermined fixed threshold value with respect to the signal power to interference power ratio (SIR). In this case, if the SIR of the received signal falls below the threshold value consecutively for a predetermined number of frame times, then the mobile station determines that the received signal is out of synchronization.

However, when external environments, such as the wind, temperature, topographical environment around the mobile station, moving velocity of the mobile station, distance between the mobile station and base station, changes, the radiowave condition around the mobile station, also, changes according to the change of the external environments. In this case, the mobile station can not properly perform the synchronization determination due to the change of radio wave condition, resulting in a degraded communication quality.

With the receiving device described in Japanese Patent Laid-Open No. 2002-16587, a received signal can be demodulated with accurate timing on the basis of the phase of pilot symbol, whereby the reception characteristic can be effectively improved. However, the synchronization determination can not always be performed according to the change of external environments.

Further, with the CDMA synchronization determination device described in Japanese Patent Laid-Open No. 2003-152599, it can be determined based on the number of error bits whether it is in an in-sync state or in an out-of-sync state. However, the synchronization determination can not always be performed according to the change of external environments.

### SUMMARY OF THE INVENTION

An object of the present invention is to provide a synchronization determination control device and a synchronization determination control method that can perform the synchronization determination according to the change of external environments, whereby the communication quality can be secured even when the external environments change.

According to the present invention, there is provided a synchronization determination control device that is mounted on a mobile station in a radio communication system and compares the SIR of a received signal with a synchronization determination value to thereby determine whether or not the received signal is in an in-sync state, the synchronization determination control device comprising: environment reflection parameter outputting means outputting an environment reflection parameter in which the environmental condition of a mobile station is reflected; and synchronization determination value changing means changing the synchronization determination value based on the environment reflection parameter outputted by the environment reflection parameter outputting means.

Also, the synchronization determination value changing means may change the synchronization determination value by comparing the environment reflection parameter with a predetermined threshold value. With this configuration, the synchronization determination value can be changed according to the change of magnitude of the environment reflection parameter, whereby the synchronization determination value can be changed according to the change of external environments.

Also, theenvironmentreflectionparameteroutputtingmeans may detect the moving velocity of the mobile station and outputs the detected moving velocity as the environment reflection parameter. With this configuration, among the external environments, when the moving velocity of the mobile station changes, the synchronization determination can be performed according to the change of moving velocity.

Also, theenvironmentreflectionparameteroutputtingmeans may output the number of fingers as the environment reflection parameter. With this configuration, among the external environments, when the distance between the mobile station and base station or the moving velocity of the mobile station changes, the synchronization determination can be performed according to the change of the distance or the moving velocity.

Also,the environment reflection parameter outputting means may measure the number of pilot symbols based on the received signal and outputs the measured number of pilot symbols as the environment reflection parameter. With this configuration, when the number of pilot symbols included in the received signal changes, the synchronization determination can be performed according to the change of the number of pilot symbols.

Also, the environment reflection parameter outputting means maymeasure the spreading factor of the received signal and outputs the measured spreading factor as the environment reflection parameter. With this configuration, when the spreading factor of the received signal changes, the synchronization determination can be performed according to the change of the spreading factor.

Also, the environment reflection parameter outputting means may output as the environment reflection parameters at least two of the moving velocity of the mobile station, the number of fingers, the number of pilot symbols and the spreading factor. With this configuration, based on the plurality of environment reflection parameters, the synchronization determination can be performed according to the change of the plural kinds of external environments.

According to the present invention, there is provided a synchronization determination control method that is applied to a mobile station in a radio communication system and compares the SIR of a received signal with a synchronization determination value to thereby determine whether or not the received signal is in an in-sync state, comprising steps of: acquiring an environment reflection parameter in which the environmental condition of the mobile station is reflected; and changing the synchronization determination value based on the environment reflection parameter.

Also, in the synchronization determination control method, the synchronization determination value is changed by comparing the environment reflection parameter with a predetermined threshold value. With this method, the synchronization determination value can be changed according to the change of magnitude of the environment reflection parameter, whereby the synchronization determination value can be changed according to the change of external environments.

According to the invention, the synchronization determination value is changed based on the environment reflection parameter. Since the synchronization determination value can be changed according to the environment condition, the synchronization determination can be performed by use of the synchronization determination value that follows the change of external environments. Consequently, the synchronization determination can be performed according to the change of external environments, whereby the communication quality can be secured even when the external environments change.

### BRIEF DESCRIPTION OF THE DRAWINGS

FIG. 1 is a block diagram showing a configuration of a synchronization determination control device according to a first embodiment of the invention;
FIG. 2 is a flowchart showing an SIR threshold value changing process and a synchronization determination process according to the first embodiment;
FIG. 3 is a block diagram showing a configuration of a synchronization determination control device according to a second embodiment of the invention;
FIG. 4 is a flowchart showing an SIR threshold value changing process and a synchronization determination process according to the second embodiment;
FIG. 5 is a block diagram showing a configuration of a synchronization determination control device according to a third embodiment of the invention;
FIG. 6 is a flowchart showing an SIR threshold value changing process and a synchronization determination process according to the third embodiment;
FIG. 7 is a block diagram showing a configuration of a synchronization determination control device according to a fourth embodiment of the invention;
FIG. 8 is a flowchart showing an SIR threshold value changing process and a synchronization determination process according to the fourth embodiment;
FIG. 9 is a block diagram showing a configuration of a synchronization determination control device according to a fifth embodiment of the invention; and
FIG. 10 is a flowchart showing an SIR threshold value changing process and a synchronization determination process according to the fifth embodiment.

### DETAILED DESCRIPTION OF THE PREFERRED EMBODIMENTS

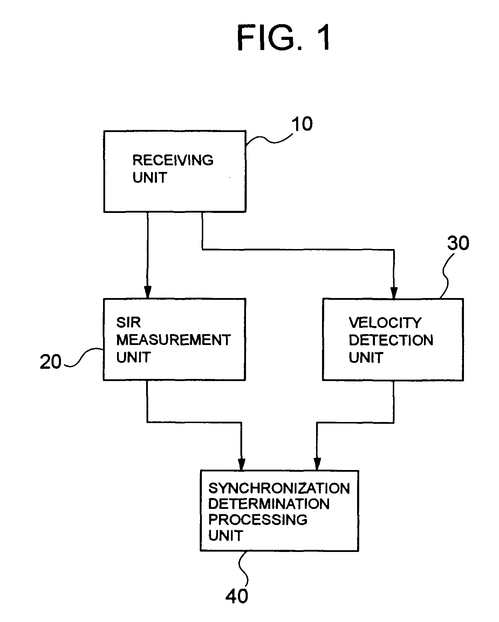

Hereinafter, embodiments of the invention will be described with reference to the attached drawings. FIG. 1 is a block diagram showing a configuration of a synchronization determination control device according to a first embodiment of the invention. According to the first embodiment, the synchronization determination control device is mounted on a mobile station, such as a mobile telephone, using a Code Division Multiple Access (CDMA) method. The synchronization determination control device acquires an environment reflection parameter serving as a parameter in which the environmental condition of the mobile station is reflected. Also, the synchronization determination control device changes, based on the acquired environment reflection parameter, a synchronization determination parameter (synchronization determination value) serving as a reference value used when the synchronization determination is performed in which it is determined whether or not the synchronization between a received signal and spreading code is being maintained. Then, the synchronization determination control device performs the synchronization determination by use of the changed synchronization determination parameter.

According to the first embodiment, the synchronization determination control device detects the moving velocity of the mobile station as the environment reflection parameter. According to the first embodiment, the synchronization determination control device performs the synchronization determination by use of a predetermined threshold value with respect to SIR (hereinafter referred to as an SIR threshold value) as the synchronization determination parameter.

As shown in FIG. 1, the synchronization determination control device includes: a receiving unit 10 that receives a radio signal from a base station (not shown); an SIR measurement unit 20 that measures SIR; a velocity detection unit 30 that detects the moving velocity of the mobile station; and a synchronization determination processing unit 40 that performs the synchronization determination.

The receiving unit 10 receives a radio signal from the base station. The SIR measurement unit 20 measures the SIR of the received signal based on the received signal from the receiving unit 10.

The velocity detection unit 30 detects the moving velocity of the mobile station. According to the first embodiment, the synchronization determination control device includes a timer to receive GPS signals from GPS satellites in each predetermined time period. The velocity detection unit 30 detects the positional information (latitude and longitude) of the mobile station from the GPS signals and determines the moving velocity of the mobile station based on the detected positional information.

The synchronization determination processing unit 40 compares the SIR threshold value with the SIR measured by the SIR measurement unit 20 to perform the synchronization determination. According to the first embodiment, when the SIR of the received signal falls below the SIR threshold value consecutively for a predetermined number of frame times, the synchronization determination processing unit 40 determines that the received signal is not in synchronization with the spreading code. Specifically, when the reception quality of the received signal falls below the threshold value, an out-of-sync state can be highly probable; therefore the synchronization determination processing unit 40 determines that the received signal is in an out-of-sync state.

Also, the synchronization determination processing unit 40 changes the SIR threshold value based on the moving velocity of the mobile station detected by the velocity detection unit 30. In this case, the synchronization determination processing unit 40 changes the SIR threshold value by comparing the moving velocity detected by the velocity detection unit 30 with a predetermined threshold value (hereinafter referred to as velocity detection threshold value). As the velocity detection threshold value, there is defined in advance a value of moving velocity assuming that the mobile station is moving on foot, by car or by rail, for example.

According to the first embodiment, environment reflection parameter outputting means is implemented by the velocity detection unit 30; synchronization determination value changing means is implemented by the synchronization determination processing unit 40.

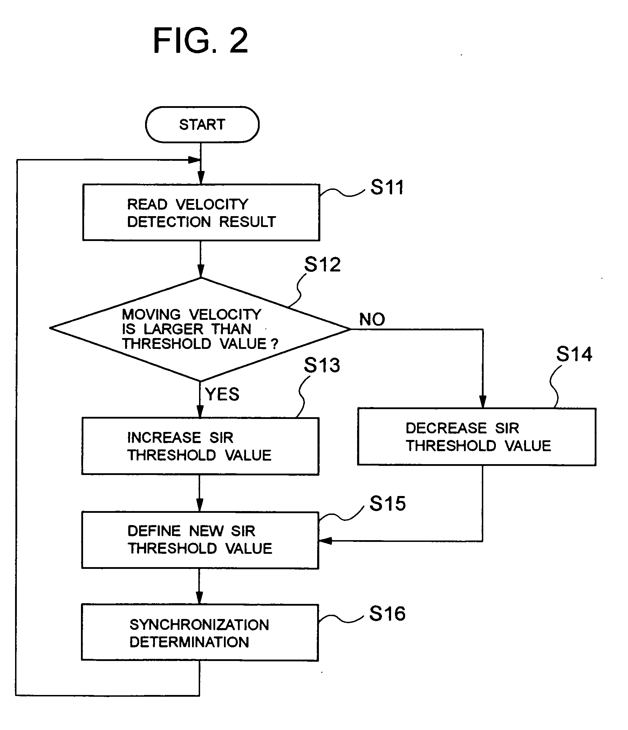

Next, an operation will be described. FIG. 2 is a flowchart showing the SIR threshold value changing process and the synchronization determination process each performed by the synchronization determination processing unit 40 in Fig.1. When the receiving unit 10 receives the radio signal from the base station, the SIR measurement unit 20 measures SIR based on the received signal. The velocity detection unit 30 detects the moving velocity of the mobile station.

The synchronization determination processing unit 40 reads the moving velocity of the mobile station from the velocity detection unit 30 (step S11). The synchronization determination processing unit 40 determines whether or not the moving velocity is larger than the velocity detection threshold value (step S12). If it is determined that the moving velocity is larger than the velocity detection threshold value, then the synchronization determination processing unit 40 changes the SIR threshold value to a larger value and defines it as a new SIR threshold value (steps S13, S15). The extent to which the SIR threshold value is increased is defined in advance based on the results of preliminary examinations such as a simulation.

If it is determined that the moving velocity is not larger than the velocity detection threshold value, then the synchronization determination processing unit 40 changes the SIR threshold value to a smaller value and defines it as a new SIR threshold value (steps S14, S15). The extent to which the SIR threshold value is reduced is defined in advance based on the results of preliminary examinations such as a simulation.

After changing the SIR threshold value, the synchronization determination processing unit 40 compares the changed SIR threshold value with the SIR measured by the SIR measurement unit 20 to perform the synchronization determination (step S16). Then, after a predetermined period of time elapses, again the synchronization determination processing unit 40 repeatedly executes the step S11 and subsequent processes. Specifically, while the SIR threshold value is repeatedly changed according to the change of the moving velocity of the mobile station, the synchronization determination processing unit 40 performs the synchronization determination.

As described above, according to the first embodiment, the synchronization determination control device changes the SIR threshold value based on the detected moving velocity of the mobile station. Since the SIR threshold value is changed according to the moving velocity, the synchronization determination can be performed by use of the SIR threshold value that follows the change of moving velocity. Consequently, the synchronization determination can be performed according to the change of moving velocity, whereby the communication quality can be secured even when the moving velocity changes.

In the first embodiment, a case in which the moving velocity of the mobile station is detected based on GPS signals is used as an example. The method for detecting the moving velocity, however, is not limited to this method. For example, the moving velocity may be detected based on the change of electric field intensity of each signal received from plural base stations.

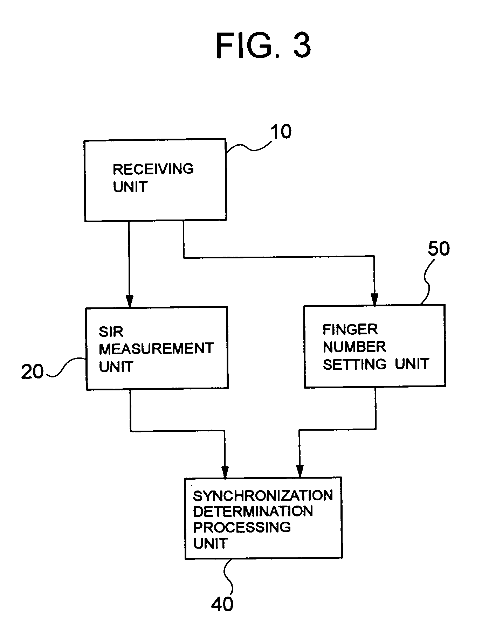

Next, a second embodiment of the invention will be described with reference to the attached drawings. FIG. 3 is a block diagram showing a configuration of a synchronization determination control device according to the second embodiment. As shown in FIG. 3, instead of the velocity detection unit 30 shown in the first embodiment, the synchronization determination control device includes a finger number setting unit 50 that sets the number of fingers. According to the second embodiment, the synchronization determination control device employs the number of fingers as the environment reflection parameter.

The finger number setting unit 50 sets the number of fingers based on the positional relation between the mobile station and base station, the moving velocity of the mobile station or the number of channels to be monitored, etc. According to the second embodiment, the finger number setting unit 50 determines the distance between the mobile station and base station or the moving velocity of the mobile station based on the positional information of the mobile station. Then, the finger number setting unit 50 sets the number of fingers based on the distance or the moving velocity. In the case where the number of fingers is set, the mobile station despreads the received signal by use of plural finger circuits corresponding to the number of fingers and combines the despread signals.

The synchronization determination processing unit 40 compares a predetermined SIR threshold value with the SIR measured by the SIR measurement unit 20 to perform the synchronization determination. Also, the synchronization determination processing unit 40 changes the SIR threshold value based on the number of fingers set by the finger number setting unit 50. In this case, the synchronization determination processing unit 40 changes the SIR threshold value by comparing the number of fingers set by the finger number setting unit 50 with a predetermined threshold value (hereinafter referred to as a finger number threshold value). The finger number threshold value is defined in advance by use of the results of simulations or the results of preliminary examinations performed with a predetermined algorism.

According to the second embodiment, the functions of the receiving unit 10 and SIR measurement unit 20 are similar to those functions described in the first embodiment.

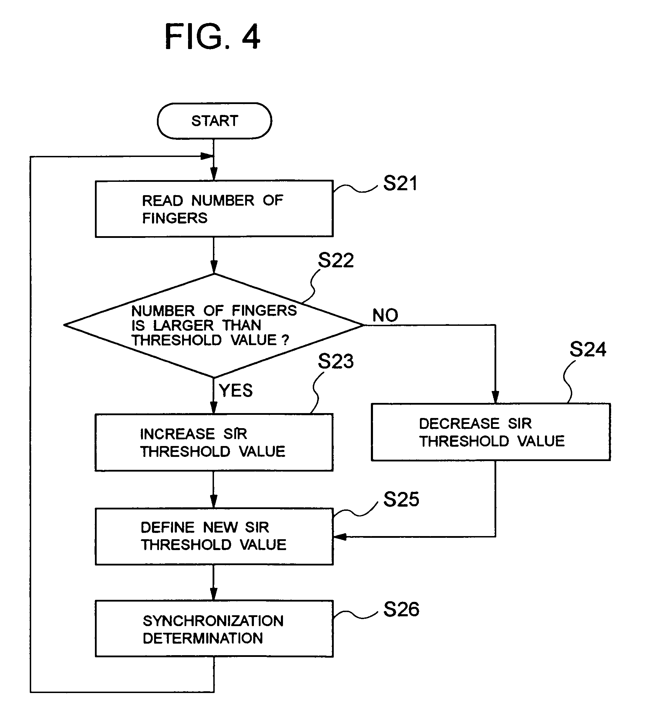

Next, an operation will be described. FIG. 4 is a flowchart showing an SIR threshold value changing process and a synchronization determination process according to the second embodiment. When the receiving unit 10 receives a radio signal from the base station, the SIR measurement unit 20 measures SIR based on the received signal. The finger number setting unit 50 detects the distance between the mobile station and base station or the moving velocity of the mobile station to thereby set the number of fingers.

The synchronization determination processing unit 40 reads the set number of fingers from the finger number setting unit 50 (step S21). The synchronization determination processing unit 40 determines whether or not the set number of fingers is larger than the finger number threshold value (step S22). If it is determined that the set number of fingers is larger than the finger number threshold value, then the synchronization determination processing unit 40 changes the SIR threshold value to a larger value and defines it as a new SIR threshold value (steps S23, S25). The extent to which the SIR threshold value is increased is defined in advance based on the results of preliminary examinations such as a simulation.

If it is determined that the set number of fingers is not larger than the finger number threshold value, then the synchronization determination processing unit 40 changes the SIR threshold value to a smaller value and defines it as a new SIR threshold value (steps S24, S25). The extent to which the SIR threshold value is reduced is defined in advance based on the results of preliminary examinations such as a simulation.

After changing the SIR threshold value, the synchronization determination processing unit 40 compares the changed SIR threshold value with the SIR measured by the SIR measurement unit 20 to perform the synchronization determination (step S26). Then, after a predetermined period of time elapses, again the synchronization determination processing unit 40 repeatedly executes the step S21 and subsequent processes. Specifically, while the SIR threshold value is repeatedly changed according to the change of the number of fingers that is based on the change of the distance between the mobile station and base station or the change of the moving velocity of the mobile station, the synchronization determination processing unit 40 performs the synchronization determination.

As described above, according to the second embodiment, the synchronization determination control device changes the SIR threshold value based on the set number of fingers. Since the SIR threshold value is changed according to the number of fingers, the synchronization determination can be performed by use of the SIR threshold value that follows the change of the distance between the mobile station and base station or the change of the moving velocity. Consequently, the synchronization determination can be performed according to the change of the distance between the mobile station and base station or the change of the moving velocity, whereby the communication quality can be secured even when the distance or the moving velocity changes.

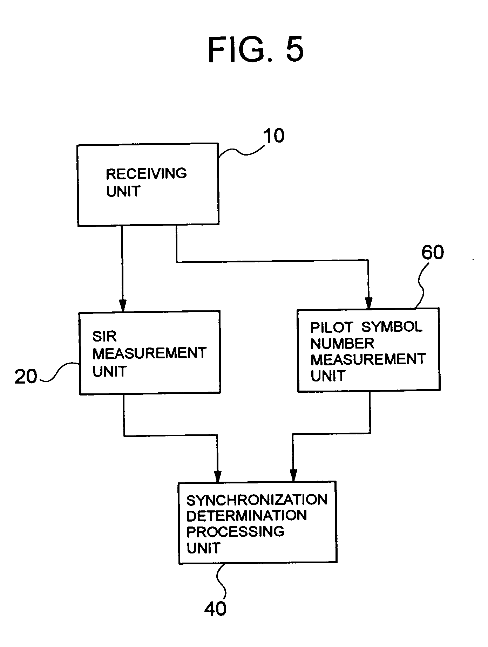

Next, a third embodiment of the invention will be described with reference to the attached drawings. FIG. 5 is a block diagram showing a configuration of a synchronization determination control device according to the third embodiment. As shown in FIG. 5, instead of the velocity detection unit 30 shown in the first embodiment, the synchronization determination control device includes a pilot symbol number measurement unit 60 for measuring the number of pilot symbols. According to the third embodiment, the synchronization determination control device employs the number of pilot symbols as the environment reflection parameter.

The pilot symbol number measurement unit 60 decodes the received signal from the receiving unit 10 and measures the number of pilot symbols included in the received signal.

The synchronization determination processing unit 40 compares a predetermined SIR threshold value with the SIR measured by the SIR measurement unit 20 to perform the synchronization determination. Also, the synchronization determination processing unit 40 changes the SIR threshold value based on the number of pilot symbols measured by the pilot symbol number measurement unit 60. In this case, the synchronization determination processing unit 40 changes the SIR threshold value by comparing the number of pilot symbols measured by the pilot symbol number measurement unit 60 with a predetermined threshold value (hereinafter referred to as a pilot symbol number threshold value). The pilot symbol number threshold value is defined in advance by use of the results of simulations or the results of preliminary examinations performed with a predetermined algorism.

According to the third embodiment, the functions of the receiving unit 10 and SIR measurement unit 20 are similar to those functions described in the first embodiment.

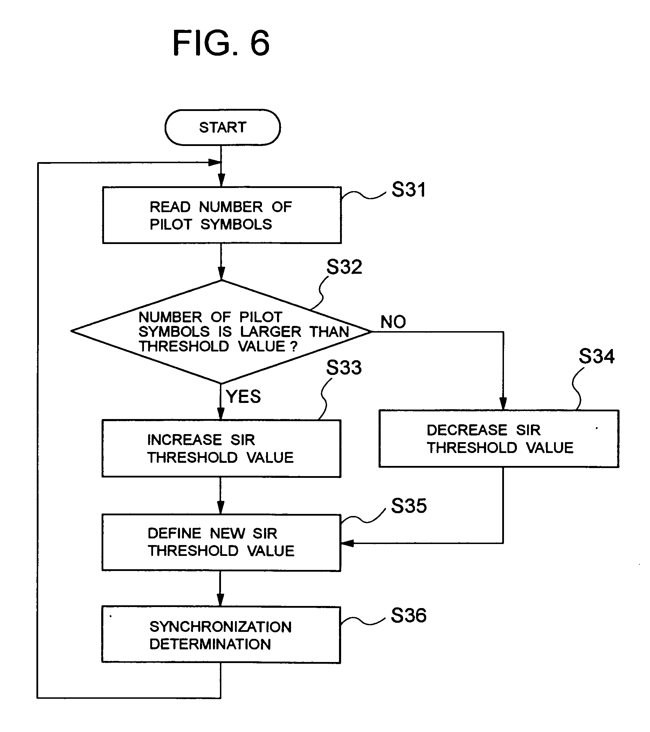

Next, an operation will be described. FIG. 6 is a flowchart showing an SIR threshold value changing process and a synchronization determination process according to the third embodiment. When the receiving unit 10 receives a radio signal from the base station, the SIR measurement unit 20 measures SIR basedonthereceivedsignal. The pilot symbol number measurement unit 60 decodes the received signal and measures the number of pilot symbols included in the received signal.

The synchronization determination processing unit 40 reads the measured number of pilot symbols from the pilot symbol number measurement unit 60 (step S31). The synchronization determination processing unit 40 determines whether or not the measured number of pilot symbols is larger than the pilot symbol number threshold value (Step S32). If it is determined that the measured number of pilot symbols is larger than the pilot symbol number threshold value, then the synchronization determination processing unit 40 changes the SIR threshold value to a larger value and defines it as a new SIR threshold value (steps S33, S35). The extent to which the SIR threshold value is increased is defined in advance based on the results of preliminary examinations such as a simulation.

If it is determined that the measured number of pilot symbols is not larger than the pilot symbol number threshold value, then the synchronization determination processing unit 40 changes the SIR threshold value to a smaller value and defines it as a new SIR threshold value (steps S34, S35). The extent to which the SIR threshold value is reduced is defined in advance based on the results of preliminary examinations such as a simulation.

After changing the SIR threshold value, the synchronization determination processing unit 40 compares the changed SIR threshold value with the SIR measured by the SIR measurement unit 20 to perform the synchronization determination (step S36). Then, after a predetermined period of time elapses, again the synchronization determination processing unit 40 repeatedly executes the step S31 and subsequent processes. Specifically, while the SIR threshold value is repeatedly changed according to the change of the number of pilot symbols, the synchronization determination processing unit 40 performs the synchronization determination.

As described above, according to the third embodiment, the synchronization determination control device changes the SIR threshold value based on the number of pilot symbols. Since the SIR threshold value is changed according to the number of pilot symbols, the synchronization determination can be performed by use of the SIR threshold value that follows the change of the number of pilot symbols included in the received signal. Consequently, the synchronization determination can be performed according to the change of the number of pilot symbols, whereby the communication quality can be secured even when the number of pilot symbols included in the received signal changes.

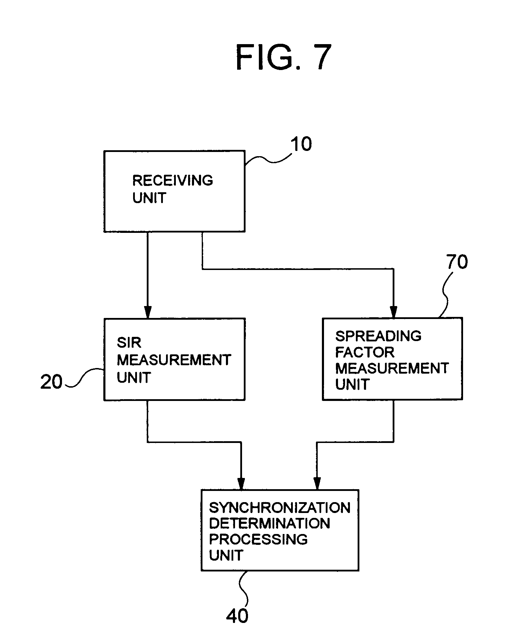

Next, a fourth embodiment of the invention will be described with reference to the attached drawings. FIG. 7 is a block diagram showing a configuration of a synchronization determination control device according to the fourth embodiment. As shown in FIG. 7, instead of the velocity detection unit 30 shown in the first embodiment, the synchronization determination control device includes a spreading factor measurement unit 70 for measuring a spreading factor. According to the fourth embodiment, the synchronization determination control device employs the spreading factor as the environment reflection parameter.

The spreading factor measurement unit 70 decodes the received signal from the receiving unit 10 and measures the spreading factor of the received signal.

The synchronization determination processing unit 40 compares a predetermined SIR threshold value with the SIR measured by the SIR measurement unit 20 to perform the synchronization determination. Also, the synchronization determination processing unit 40 changes the SIR threshold value based on the spreading factor measured by the spreading factor measurement unit 70. In this case, the synchronization determination processing unit 40 changes the SIR threshold value by comparing the spreading factor measured by the spreading factor measurement unit 70 with a predetermined threshold value (hereinafter referred to as a spreading factor threshold value). The spreading factor threshold value is defined in advance by use of the results of simulations or the results of a preliminary examination performed with a predetermined algorism.

According to the fourth embodiment, the functions of the receiving unit 10 and SIR measurement unit 20 are similar to those functions described in the first embodiment.

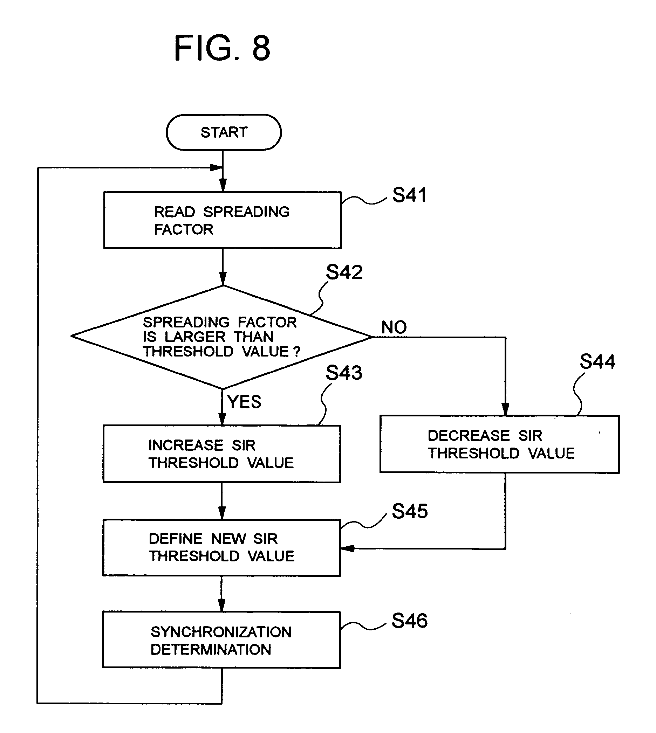

Next, an operation will be described. FIG. 8 is a flowchart showing an SIR threshold value changing process and a synchronization determination process according to the fourth embodiment. When the receiving unit 10 receives a radio signal from the base station, the SIR measurement unit 20 measures SIR based on the received signal. The spreading factor measurement unit 70 measures the spreading factor of the received signal.

The synchronization determination processing unit 40 reads the measured spreading factor from the spreading factor measurement unit 70 (Step S41). The synchronization determination processing unit 40 determines whether or not the measured spreading factor is larger than the spreading factor threshold value (step S42). If it is determined that the measured spreading factor is larger than the spreading factor threshold value, then the synchronization determination processing unit 40 changes the SIR threshold value to a larger value and defines it as a new SIR threshold value (steps S43, S45). The extent to which the SIR threshold value is increased is defined in advance based on the results of preliminary examinations such as a simulation.

If it is determined that the measured spreading factor is not larger than the spreading factor threshold value, then the synchronization determination processing unit 40 changes the SIR threshold value to a smaller value and defines it as a new SIR threshold value (steps S44, S45). The extent to which the SIR threshold value is reduced is defined in advance based on the results of preliminary examinations such as a simulation.

After changing the SIR threshold value, the synchronization determination processing unit 40 compares the changed SIR threshold value with the SIR measured by the SIR measurement unit 20 to perform the synchronization determination (step S46). Then, after a predetermined period of time elapses, again the synchronization determination processing unit 40 repeatedly executes the step S41 and subsequent processes. Specifically, while the SIR threshold value is repeatedly changed according to the change of spreading factor, the synchronization determination processing unit 40 performs the synchronization determination.

As described above, according to the fourth embodiment, the synchronization determination control device changes the SIR threshold value based on the spreading factor. Since the SIR threshold value is changed according to the spreading factor, the synchronization determination can be performed by use of the SIR threshold value that follows the change of spreading factor. Consequently, the synchronization determination can be performed according to the change of spreading factor, whereby the communication quality can be secured even when the spreading factor changes.

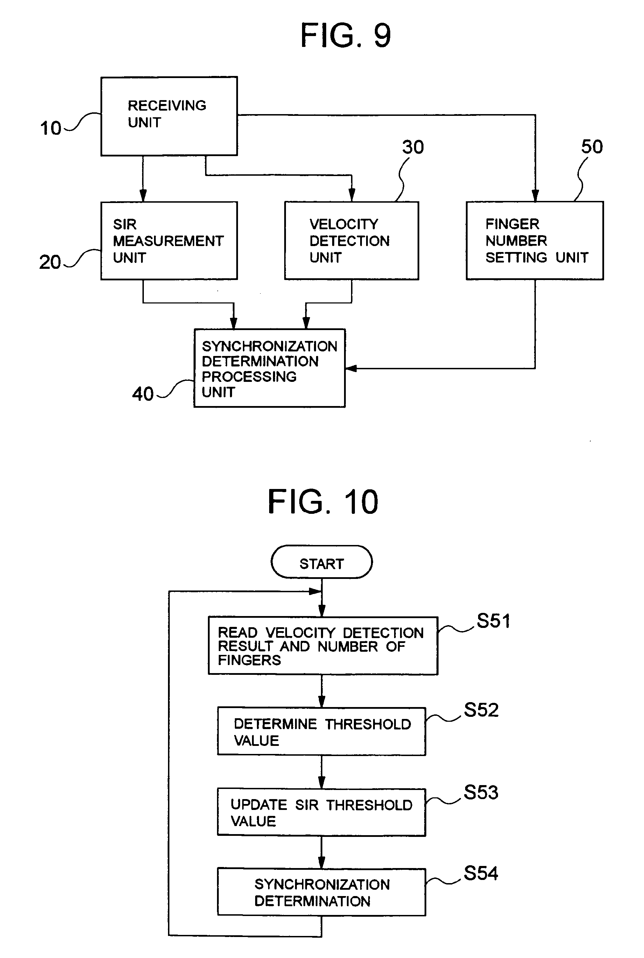

Next, a fifth embodiment of the invention will be described with reference to the attached drawings. FIG. 9 is a block diagram showing a configuration of a synchronization determination control device according to the fifth embodiment. As shown in FIG. 9, in addition to the configuration shown in the first embodiment, the synchronization determination control device includes the finger number setting unit 50 for setting the number of fingers. According to the fifth embodiment, the synchronization determination control device changes a predetermined SIR threshold value based on a plurality of environment reflection parameters and performs the synchronization determination by use of the changed SIR threshold value. In the fifth embodiment, a case in which the moving velocity of the mobile station and the number of fingers are employed as the environment reflection parameters will be described.

The synchronization determination processing unit 40 compares the SIR threshold value with the SIR measured by the SIR measurement unit 20 to perform the synchronization determination. Also, the synchronization determination processing unit 40 changes the SIR threshold value based on the moving velocity detected by the velocity detection unit 30 and the number of fingers set by the finger number setting unit 50. In this case, the synchronization determination processing unit 40 changes the SIR threshold value by comparing the moving velocity with the velocity detection threshold value and by comparing the number of fingers with the finger number threshold value.

According to the fifth embodiment, the functions of the receiving unit 10, SIR measurement unit 20 and velocity detection unit 30 are similar to those functions described in the first embodiment. Also, the function of the finger number setting unit 50 is similar to corresponding function in the second embodiment.

Next, an operation will be described. FIG. 10 is a flowchart showing an SIR threshold value changing process and a synchronization determination process according to the fifth embodiment. When the receiving unit 10 receives the radio signal from the base station, the SIR measurement unit 20 measures SIR based on the received signal. Also, the velocity detection unit 30 detects the moving velocity of the mobile station. Also, the finger number setting unit 50 detects the distance between the mobile station and base station or the moving velocity of the mobile station and sets the number of fingers.

The synchronization determination processing unit 40 reads the moving velocity of the mobile station from the velocity detection unit 30 and reads the number of fingers from the finger number setting unit 50 (step S51). The synchronization determination processing unit 40 performs the threshold value determination with respect to each of the moving velocity and number of fingers (step S52). In this case, the synchronization determination processing unit 40 determines whether or not the moving velocity is larger than the velocity detection threshold value and at the same time determines whether or not the number of fingers is larger than the finger number threshold value.

The synchronization determination processing unit 40 changes the SIR threshold value based on the threshold value determination results of the step S52 (step S53). According to the fifth embodiment, if it is determined that both the moving velocity and the number of fingers are larger than the respective threshold values, then the synchronization determination processing unit 40 changes the SIR threshold value to a larger value and defines it as a new SIR threshold value. The extent towhich the SIR thresholdvalue is increased is defined in advance based on the results of preliminary examinations such as a simulation.

If it is determined that any of the moving velocity and the number of fingers is not larger than the threshold value, then the synchronization determination processing unit 40 changes the SIR threshold value to a smaller value and defines it as a new SIR threshold value. The extent to which the SIR threshold value is reduced is defined in advance based on the results of preliminary examinations such as a simulation.

The method for changing the SIR threshold value is not limited to one shown in the fifth embodiment. For example, the synchronization determination processing unit 40 may change the SIR threshold value to a larger value when it is determined that any of the moving velocity and the number of fingers is larger than the threshold value, and may change the SIR threshold value to a smaller value when it is determined that both the moving velocity and the number of fingers are not larger than the respective threshold values.

After changing the SIR threshold value, the synchronization determination processing unit 40 compares the changed SIR threshold value with the SIR measured by the SIR measurement unit 20 to perform the synchronization determination (step S54). Then, after a predetermined period of time elapses, again the synchronization determination processing unit 40 repeatedly executes the step S51 and subsequent processes. Specifically, while the SIR threshold value is repeatedly changed according to both the change of moving velocity and the change of the number of fingers, the synchronization determination processing unit 40 performs the synchronization determination.

As described above, according to the fifth embodiment, the synchronization determination control device changes the SIR threshold value based on both the moving velocity of the mobile station and the number of fingers. Since the SIR threshold value is changed according to both the moving velocity and the number of fingers, the synchronization determination can be performed by use of the SIR threshold value that follows both the change of the moving velocity and the change of the distance between the mobile station and the base station. Consequently, the synchronization determination can be performed according to both the change of the moving velocity and the change of the distance, whereby the communication quality can be secured even when the moving velocity and the distance change.

According to the fifth embodiment, the moving velocity of the mobile station and the number of fingers are employed as the environment reflection parameters. Alternatively, a combination of a plurality of other environment reflection parameters, such as the number of pilot symbols and the spreading factor, may be employed. Also, instead of a combination of only two environment reflection parameters, a combination of three or more environment reflection parameters may be employed.

According to each of the above described embodiments, the SIR threshold value is changed by comparing the environment reflection parameter with a single threshold value. Alternatively, the SIR threshold value may be more minutely changed. For example, the synchronization determination processing unit 40 may include a table in which the relation between each value of the environment reflection parameter and the SIR threshold value is defined, whereby the SIR threshold value corresponding to the measured value of the environment reflection parameter can be selected to define the selected value as a new SIR threshold value. Detectable information of the moving velocity of the mobile station can be sent from the base station to the moving station.

The synchronization determination control device according to each of the above described embodiments of the invention can be employed as a synchronization determination control device of a mobile station, such as a mobile telephone, using Code Division Multiple Access (CDMA) method. With the synchronization determination control device according to each of the above described embodiments of the invention, the mobile station can perform the synchronization determination according to the change of external environments, whereby the communication quality can be secured even when the external environments change.

## Claims

1. A synchronization determination control device that is mounted on a mobile station in a radio communication system and compares the SIR (Signal to Interference Ratio) of a received signal with a synchronization determination value to thereby determine whether or not the received signal is in an in-sync state, the synchronization determination control device comprising:
environment reflection parameter outputting means outputting an environment reflection parameter in which the environmental condition of the mobile station is reflected; and
synchronization determination value changing means changing the synchronization determination value based on the environment reflection parameter outputted by the environment reflection parameter outputting means.

2. The synchronization determination control device according to claim 1, wherein the synchronization determination value changing means changes the synchronization determination value by comparing the environment reflection parameter with a predetermined threshold value.

3. The synchronization determination control device according to claim 1, wherein the environment reflection parameter outputtingmeans detects themovingvelocityof themobile station and outputs the detected moving velocity as the environment reflection parameter.

4. The synchronization determination control device according to claim 1, wherein the environment reflection parameter output ting means outputs the number of fingers as the environment reflection parameter.

5. The synchronization determination control device according to claim 1, wherein the environment reflection parameter outputting means measures the number of pilot symbols based on the received signal and outputs the measured number of pilot symbols as the environment reflection parameter.

6. The synchronization determination control device according to claim 1, wherein the environment reflection parameter outputting means measures the spreading factor of the received signal and outputs the measured spreading factor as the environment reflection parameter.

7. The synchronization determination control device according to claim 1, wherein the environment reflection parameter outputting means outputs as the environment reflection parameters at least two of the moving velocity of the mobile station, the number of fingers, the number of pilot symbols and the spreading factor.

8. A synchronization determination control method that is applied to a mobile station in a radio communication system and compares the SIR (Signal to Interference Ratio) of a received signal with a synchronization determination value to thereby determine whether or not the received signal is in an in-sync state, comprising steps of:
acquiring an environment reflection parameter in which the environmental condition of the mobile station is reflected; and
changing the synchronization determination value based on the environment reflection parameter.

9. The synchronization determination control method according to claim 8, wherein the synchronization determination value is changed by comparing the environment reflection parameter with a predetermined threshold value.
